# EUROPEAN PATENT APPLICATION

(11) **EP 1 008 609 A2**
(43) Date of publication of application: **14.06.2000**
(21) Application number: 99124291.8
(22) Date of filing: 06.12.1999
(51) Int. Cl.: C08G 77/06

(54) **Process for the preparation of hydrogen silsesquioxane resin and modified hydrogen silsesquioxane resin**

(30) Priority: 07.12.1998 JP 34735498
(71) Applicant: DOW CORNING ASIA, Ltd., Tokyo 100-0005 (JP)
(72) Inventor: Carpenter, Leslie Earl II, Dow Corning Asia, Ltd., Chiyoda-ku, Tokyo (JP); Suto, Michitaka, Dow Corning Asia Ltd., 4th Floor,, Tokyo 100 (JP); Zank, Gregg Alan, Dow Corning Asia Ltd, 4th Floor, Tokyo 100 (JP)
(74) Representative: Sama, Daniele, Dr.

(57) **Abstract**

The present invention pertains to a process for extremely easily preparing hydrogen silsesquioxane resin soluble in solvents without gelling and a process for producing chemically stable hydrogen silsesquioxane resin.

Hydrogen silsesquioxane resin is prepared by carrying out hydrolysis and condensation of trichlorosilane (HSiCl₃) in a mixture comprising water and at least an oxygen-containing organic solvent selected from ketones , ethers, and esters; with the amount of the added water at such time is at least 12 mol per 1 mol of the amount of the added trichlorosilane. The silanol of the thus obtained resin is capped with R₃SiO_{0.5} (R is a methyl group, a vinyl group, or a hydrogen atom), producing modified hydrogen silsesquioxane resin represented by the formula (HSiO_{1.5})ₓ(R₃SiO_{0.5})₁₋ₓ.

## Description

### FIELD OF THE INVENTION

The present invention relates to a process for preparing hydrogen silsesquioxane resins in a high yield without adding strong acids, such as sulfuric acid, hydrochloric acid, etc. The present invention also relates to a process for the preparation of modified hydrogen silsesquioxane resins of superior chemical stability.

### BACKGROUND OF THE INVENTION

Preparation of hydrogen silsesquioxane resins by hydrolyzing trichlorosilane is well known in the art. It has not been easy to obtain condensation products soluble in solvents without gelling because the products of hydrolysis have a tendency toward gelling due to the HCl generated as a by-product during the above mentioned hydrolysis.

Japanese Kokai (Unexamined) Patent Publication No. Sho 60[1985]-86017 discloses a process, in which a solution is prepared by dissolving trichlorosilane in a water-saturated solvent and thereby subjecting the trichlorosilane to hydrolysis and condensation by bubbling an inert gas along with water vapor through the solution to prepare the hydrogen silsesquioxane. In that process the water is added in a manner so as not to add more water than the solvent can be saturated with during the condensation reaction because when there is a water phase in addition to the solvent phase, hydrogen bubbles containing dissolved water and trichlorosilane are generated at the interface of the water layer and the organic layer, resulting with the condensate gelling and becoming insoluble in the solvent.

In the process of preparing hydrogen silsesquioxane resin by the hydrolysis of trichlorosilane and the subsequent condensation reaction, it is necessary to carefully manage the reaction conditions during the hydrolysis of trichlorosilane and unreacted radicals of the hydrolyzate. In other words, it is necessary to suppress the generation of gels produced when a violent reaction takes place. The presence of hydrochloric acid generated by the hydrolysis of trichlorosilane has been suggested as one of the main factors causing the reaction to proceed violently. In the preparation of hydrogen silsesquioxane resin using trichlorosilane as the raw material, hydrochloric acid tends to facilitate the reaction between the unreacted groups of the hydrolyzate, and this tendency is enhanced, in particular, by the rise in the concentration of hydrochloric acid in the reaction system which takes place as the hydrolysis proceeds.

For example, in a process in which water is slowly added to a trichlorosilane solution (where the solvent is an organic solvent), most of the water is essentially consumed by a reaction with the excess trichlorosilane. For this reason, the concentration of the generated hydrochloric acid relative to water rapidly increases. Such concentrated hydrochloric acid is soluble in organic solvents, such as solvents represented by methylisobutyl ketone (MIBK), resulting in the phenomenon of transition of the hydrochloric acid in the reaction system from the water phase into the organic phase.

On the other hand, hydrogen silsesquioxane, which is produced by hydrolysis in the water phase, flows to the organic phase and contains numerous unreacted silanol groups. The facilitation of the condensation reaction between these unreacted groups by the hydrochloric acid that flows to the organic phase ultimately leads to a violent condensation reaction between the silanol groups, resulting in the production of gels. In this manner, the increase in the concentration of hydrochloric acid produced by hydrolysis in the water phase affects the process of hydrogen silsesquioxane resin preparation in its entirely. Because the added water is consumed in this reaction system in the manner described above, the reaction system appears to have only one phase consisting of the organic phase.

In the process of hydrogen silsesquioxane resin preparation in such a single-phase system, hydrochloric acid removal becomes an important task alongside the management of the reaction temperature and the frequency of water addition..

### SUMMARY OF THE INVENTION

The present invention pertains to a process for extremely easily preparing hydrogen silsesquioxane resin soluble in solvents without gelling. The hydrogen silsesquioxane resin is prepared by carrying out hydrolysis and condensation of trichlorosilane (HSiCl₃) in a mixture comprising water and at least one oxygen-containing organic solvent selected from ketones, ethers, and esters, with the amount of the added water during addition or after addition being at least 12 mol per 1 mol of the amount of the added trichlorosilane

The present invention also pertains to a process for producing chemically stable hydrogen silsesquioxane resin. Any silanol of the thus obtained resin may also be capped with R₃SiO_{0.5} wherein R is a methyl group, a vinyl group, or a hydrogen atom, thereby producing a modified hydrogen silsesquioxane resin represented by the formula (HSiO_{1.5})ₓ(R₃SiO_{0.5})₁₋ₓ.

### DETAILED DESCRIPTION OF THE INVENTION

The present invention pertains to a process for the preparation of hydrogen silsesquioxane resin in which hydrolysis and condensation of trichlorosilane (HSiCl₃) are carried out in a two-phase system comprising water and an organic solvent which comprises at least one oxygen-containing organic solvent, with the amount of the added water during addition or after addition being at least 12 mol per 1 mol of trichlorosilane.

The hydrogen silsesquioxane resin is produced from the hydrolysis reaction of HSiCl₃ and the condensation reaction of the hydrolyzate thereby produced in a two-phase system comprising (1) an organic solvent which comprises at least one oxygen-containing organic solvent and (2) water. The resulting hydrogen silsesquioxane resin is obtained as a solution in the organic solvent (1) and has a large number of silanol groups.

Typically, in the present invention, the hydrolysis of trichlorosilane (HSiCl₃) is carried out in a two-phase system comprising water and an organic solvent which comprises at least one oxygen-containing organic solvent in which said organic solvent, water, and trichlorosilane are added to a reactor. The hydrolysis is carried out in such a manner that both upon addition and in the process of addition, the amount of the water present is not less than 12 mol per 1 mol of the trichlorosilane. There are no particular limitations concerning the order in which the ingredients are added, although it is desirable that the aforementioned relationship between the amount of water and trichlorosilane should be satisfied in the process of addition. In a preferred embodiment of the present invention, a two-phase system comprising of water and an organic solvent which comprises at least one oxygen-containing organic solvent is prepared in a reactor, and trichlorosilane, which may or may not be dissolved, in said organic solvent , is added to the system. Alternatively, the water may be added first, followed by adding trichlorosilane dissolved in an organic solvent which comprises at least one oxygen-containing solvent. Also water and trichlorosilane dissolved in the organic solvent comprising at least an oxygen-containing solvent can be added simultaneously.

The present invention, in which (1) the suppression of the transition of hydrochloric acid to the organic phase by means of introducing water in the reaction system from the very beginning in an amount such that it can prevent an increase in the concentration of the hydrochloric acid generated by the trichlorosilane introduced in the reaction system, and (2) the setting of the amount of water capable of preventing an increase in the concentration of the hydrochloric acid generated by the trichlorosilane introduced in the reaction system to at least 12 mol per 1 mol of the trichlorosilane are important methods used for preventing the generation of gels caused by the hydrochloric acid produced during hydrolysis, successfully facilitating the management of the reaction conditions in the process of hydrogen silsesquioxane resin preparation.

As a result of the introduction of water in the reaction system in an amount sufficient for preventing the increase in the concentration of hydrochloric acid to a concentration, at which it becomes soluble in organic solvents, the hydrochloric acid that is generated by hydrolysis is diluted by the water, which suppresses an increase in its concentration, preventing the transition of the hydrochloric acid to the organic phase and the accompanying generation of gels in the organic phase.

In the present invention a large amount of water is thus introduced in the system from the very beginning, the fact that the process of hydrogen silsesquioxane resin preparation is carried out in a two-phase system made up of a water phase and an organic phase constitutes an characteristic of the process, in other words, the fact that trichlorosilane hydrolysis and the subsequent condensation reaction are carried out in a two-phase system made up of a water phase and an organic phase (with the amount of water such that it prevents an increase in the concentration of the hydrochloric acid generated by hydrolysis at least to a degree, at which it becomes soluble in the organic solvent) may be considered characteristic of the embodiments of the present invention.

The present invention, by setting the amount of H₂O to at least 12 mol per 1 mol of HSiCl₃, reduces the concentration of the HCl produced as a by-product and thereby suppresses the gelling of the hydrolyzate. From the standpoint of the gelling-suppressing effect, it is preferred that the amount of the added H₂O should be not less than 15 mol, more preferably, not less than 20 mol, and even more preferably, not less than 25 mol per 1 mol of HSiCl₃. There are no particular limitations concerning the upper limit for the amount ofthe added H₂O, but from the practical viewpoint, it is recommended that the amount should he not more than 100 mol, and, preferably, not more than 50 mol per 1 mol of HSiCl₃.

In the present invention, the temperature of the reaction during hydrolysis and condensation should preferably be not less than 5°C and not more than 25°C. Lower temperatures make it more difficult for the reaction to proceed, which is undesirable from a practical standpoint; and, on the other hand, higher temperatures are undesirable because the reaction proceeds violently.

The present invention makes use of an oxygen-containing organic solvent. The solvent is effective in the formation of hydrogen bonds with the intermediates of hydrogen silsesquioxane resin produced in the above mentioned reactions of hydrolysis and condensation as well as the silanol groups of the hydrogen silsesquioxane resin, which stabilizes them and prevents gelling, The oxygen-containing organic solvent is selected from the group consisting of ketone based organic solvents, ether based organic solvents, and ester based organic solvents.

Methylisobutylketone, methylethylketone, and acetone are examples of ketone based organic solvents, diethyl ether and tetrahydrofuran are examples of ether based organic solvents, and ethyl acetate and butyl acetate are examples of ester based organic solvents.

In the present invention, the mixture containing water and an oxygen-containing organic solvent may comprise other organic solvents so long as this docs not adversely affect the hydrolysis and condensation of HSiCl₃ and does not influence the effects of the invention. Aromatic hydrocarbon solvents, aliphatic hydrocarbon solvents, and the like, are suggested as examples.

Melhylisobutylketone is the most preferable solvent because the above described gelling suppressing effect is most pronounced when it is used.

Additionally, the present invention discloses a method for increasing chemical stability by blocking the unreacted silanol groups contained in the thus obtained hydrogen silsesquioxane resin. Specifically, a modified hydrogen silsesquioxane resin can be produced by reacting a chlorosilane with relatively small substitutional groups, such as R₃SiCl, general formula (1), where R is a methyl group, a vinyl group, or a hydrogen atom, with the product of hydrolysis and condensation. Although the necessary amount of the R₃SiCl mentioned above is determined based on the amount of the remaining silanol groups, conducting the reaction by adding an excess amount does not cause any particular problems. Usually, the above chlorosilane is used within the range of from not less than 0.5 mol to not more than 5 mol per 1 mol HSiCl₃.

The modified hydrogen silscsquioxane resin is a resin obtained by blocking the remaining silanol groups which the hydrogen silsesquioxane resin has by reacting them with the chlorosilane, with its structure represented by general formula (2) (HSiO_{1.5})ₓ(R₃SiO_{0.5})₁₋ₓ where R is a methyl group, a vinyl group, or a hydrogen atom and where x is a number of not less than 0.7 and nut more than 0.99. The above resin is soluble in many organic solvents and permits long-term storage in the form of a solution in an organic solvent. Uniform coating films of superior physical properties are obtained by coating substrates with such a solution. In addition, films and other molded articles can be obtained by appropriate methods.

Since such modified hydrogen silsesquioxane resin with blocked silanol groups is superior in terms of chemical stability, it can find a variety of uses, first of all, in electronic material applications, in particular, materials used for layer insulation.

Hydrolysis and condensation may be carried out by subjecting a two-phase comprising water (at least 12 mol per 1 mol of the HSiCl₃ mentioned below) and an organic solvent which comprises at least one oxygen-containing organic solvent to agitation while adding minute amounts of HSiCl₃ thereto. Here, as described above, the reaction is carried out by maintaining the temperature at about 10°C to 25°C. In addition, HSiCl₃ is usually added as described above by dissolving it an organic solvent of the same type as the an organic solvent which comprises at least one oxygen-containing organic solvent used in the mixture.

Upon completion of the addition, if necessary, agitation may be continued. In particular, in order to carry out hydrolysis and condensation completely at low temperatures and guarantee the necessary yields, it is recommended that agitation be conducted, for example, for 10 to 180 minutes upon completion of the addition.

Also, in the initially prepared mixture of water and an organic solvent which comprises at least one oxygen-containing organic solvent, the weight ratio of water to the organic solvents is not particularly critical, but it is suggested that the ratio of water to the organic solvent which comprises at least one oxygen-containing organic solvent should be within the range of from 1:1 to 5:1.

The addition of minute amounts of HSiCl₃ is carried out for the purpose of conducting the reaction in such a manner that the hydrolysis and condensation of HSiCl₃ and water does not proceed rapidly so that it brings about the so-called gelling. Therefore, although the addition of minute amounts is typically carried out in a dropwise manner, methods other than dropping, and other methods of promoting the reaction while suppressing rapid hydrolysis and condensation, can be used as well. For instance, a process in which HSiCl₃ or its solution in the form of water vapor is contacted with the mixture, and a process, in which there is provided a tube running to a vessel filled with the mixture from another vessel filled with HSiCl₃ or its solution, and minute amounts of HSiCl₃ or its solution are added to the mixture through the outlet of said tube, and the like, are suggested as examples thereof.

A hydrogen silsesquioxane resin solution may also be obtained by bringing hydrolysis and condensation to completion, allowing the solution obtained as the reaction mixture to stand to separate it into two layers, and then removing the organic layer only, washing it with water to obtain a pH of 6 to 7, and drying said organic layer. In addition, although commonly used drying agents are used for the drying of the organic phase, there are no particular limitations concerning the method of drying or the drying agents used. For instance, magnesium sulfate and the like are suggested as the drying agents. After using the drying agent, the drying agent is removed using for example filtration through a glass frit.

The addition of R₃SiCl (where R is, independently, a methyl group, a vinyl group, or a hydrogen atom) to the hydrogen silsesquioxane resin solution obtained in the above described process allows for blocking the silanol groups which the hydrogen silsesquioxane resin has. The blocking of the silanol groups of the hydrogen silsesquioxanc resin is usually carried out by adding the silane to the resin solution and performing agitation for about 1 hr to 20 hrs at ordinary temperature. Then, the modified hydrogen silsesquioxane resin , in which the silanol groups are blocked by the silyl groups of the silane, is obtained by removing the solvent.

In accordance with the preparative process of the present invention, the number of unreacted silanol groups is considerably reduced by the blocking the silanol groups present on the hydrogen silsesquioxane resin , and, thus resulting in a modified hydrogen silsesquioxane resin of especially superior chemical stability.. The obtained resin is particularly useful for making materials used in electronics, for example, it is appropriate for use in materials used for layer insulation. The modified hydrogen silsesquioxane resin represented by the general formula (2) is suggested as a hydrogen silsesquioxane resin for use in electronic materials and such. Here, when the value of x exceeds 0.99, there is a serious concern that the silanol groups might not be completely blocked, and when the value of x is less than 0.7, the proportion of the hydrogen silsesquioxane structure decreases, which might easily affect the performance characteristics, such as the heat resistance, of the modified hydrogen silsesquioxane resin. The modified hydrogen silsesquioxane resin, in which the value of x is within the above range, is obtained in accordance with the preparative process by appropriately adjusting the reaction conditions and the compounding proportions of the raw materials, such as HSiCl₃, water, and silane represented by the general formula (1) and can be prepared, for example, under the following general conditions.
(1) Water:HSiCl₃ = about 12:1 to about 50:1 (mole ratio)
(2) Oxygen-containing organic solvent: metylisobutylketone
(3) Time used for adding the methylisobutylketone solution of HSiCl₃ to the mixture of water and methylisobutylketone: about 10 to about 30 minutes
(4) Time used for agitation upon addition: about 2 to about 5 hrs
(5) Reaction temperature: about 10°C to 20°C
(6) Amount of added silane (R₃SiCl) of formula (1):
   Added HSiCl₃:R₃SiCl = about 1: 0.5 to about 1:5 (mole ratio)
(7) Time used for agitation upon addition of the entire amount of R₃SiCl to the oxygen-containing organic solvent of hydrogen silsesquioxane resin: about 1 hr to about 30 hrs.

Exemplary embodiments of the present invention are shown hereinbelow.

A process for the preparation of a hydrogen silsesquioxane resin solution comprising the steps of conducting hydrolysis and condensation by subjecting a mixture made up of water (not less than 12 mol per 1 mol of HSiCl₃ mentioned below) and ketone solvent to agitation and adding minute amounts of a solution of HSiCl₃ in a ketone solvent thereto while maintaining the temperature at 10°C∼25°C, allowing the resultant solution to stand to separate it into two layers, and then removing the organic layer only, washing it with water to obtain a pH of 6 to 7, and drying said organic layer.

A process for the preparation of a hydrogen silsesquioxane resin solution comprising the steps of subjecting a mixture made up of water (not less than 12 mol per 1 mol of HSiCl₃ mentioned below) and a ketone solvent to agitation and adding minute amounts of a solution of HSiCl₃ in a ketone solvent thereto while maintaining the temperature at 10°C∼25°C, and, upon completion of the addition, conducting further agitation to carry out the hydrolysis and condensation and prepare a reaction mixture, allowing said reaction mixture stand to separate it into two layers, and then removing the organic layer only, washing it with water to obtain a pH of 6 to 7, and drying said organic layer.

A process as described in the embodiments above in which the prepared hydrogen silsesquioxane resin solution is obtained and then removing the solvent.

A process for the preparation of modified hydrogen silsesquioxane resin soluble in solvents comprising the steps of blocking the remaining silanol groups of the hydrogen silsesquioxane resin with trimethylsilyl groups by adding R₃SiCl (where R is independently a methyl group, a vinyl group, or a hydrogen atom) to the hydrogen silsesquioxane resin solution obtained as described above and then removing the solvent.

The preparative processes as described above in which the weight ratio of water to the oxygen containing organic solvent in the mixture is within the range of about 1:1 to about 5:1.

The preparative process of any of the above embodiments in which the mole ratio of water contained in the mixture to the HSiCl₃ dropped into said mixture is about 12:1 to about 100:1.

The preparative process of any of the above embodiments in which the mole ratio of water contained in the mixture to the HSiCl₃ dropped into said mixture is about 20:1 to about 50:1.

The preparative process of any of the above embodiments in which the mole ratio of water contained in the mixture to the HSiCl₃ dropped into said mixture is about 25:1 to 50:1.

The preparative process of any of the above embodiments in which the mole ratio of water contained in the mixture to the HSiCl₃ dropped into said mixture is about 30:1 to about 50:1.

The preparative process of any of the above embodiments in which the R₃SiCl is Me₃SiCl or Me₂HSiCl where the Me represents a methyl group.

A layer insulation material comprising hydrogen silsesquioxane or modified hydrogen silsesquioxane resin prepared in accordance with the preparative process of any of the above embodiments.

The layer insulation material described above in which the structural formula of the hydrogen silsesquioxane resin is selected from the following structures (1) or (2).

(1) (HSiO_{1.5})ₓ(Me₃SiO_{0.5})₁₋ₓ

(where x is a number of not less than 0.7 and not more than 0.99)

(2) (HSiO_{1.5})ₓ(Me₂HSiO_{0.5})₁₋ₓ

(where x is a number of not less than 0.7 and not more than 0.99)

### EXAMPLES

### Example 1

A 300-mL round bottom flask was equipped with an overhead (over head) stirrer, condenser, and a charging funnel. H₂O (110 g; 6.11 mol) and methylisobutylketone (80 g) were added to the flask, and the solvent mixture was cooled to 10°C in an ice bath. A mixture of HSiCl₃ (25 g; 0.18 mol) and methylisobutylketone (35 g) was charged in the charging tunnel. Subsequently, the chlorosilane solution was added under vigorous agitation to the cooled solvent mixture at a rate such that the reaction temperature remained at about 10°C to about 20°C (for about 20 minutes). After the above described addition, the ice bath was removed, and the reaction mixture was subjected to agitation for another 3 hours. After that, the reaction mixture was allowed to stand to separate it into two layers. The organic phase was removed, water washed until a pH of about 6 to 7 was obtained, and then dried by subjecting it to agitation along with MgSO₄. The drying agent was filtered off by passing through sintered glass frit. By doing so, a solution of hydrogen silsesquioxane resin was obtained. The solution was a transparent, gel-free, and homogeneous solution. Subsequently, the Si-OH present in the solution were immediately capped with Me₃SiCl (45 g). Then, after subjecting the chlorosilane / filtrate mixture to agitation for 16 hours using magnetic stirring bars and then removing the solvent under vacuum, 6.5 g white powder
(HSiO_{1.5})_{0.9}(Me₃SiO_{0.5})_{0.1} where Me is a methyl group was obtained with a yield of 56.4% as converted to HSiO_{1.5}.
²⁹SiNMR: d 12.34 (Me₃SiO, 0.1 Si); d-85.14 (HSiO_{3/2} 0.9Si).
IR (thin film): 2961 cm⁻¹ (w); 2255 cm⁻¹ (m); 1721 cm⁻¹ (vw); 1256 cm⁻¹ (w); 1132 cm⁻¹ (vs); 1074 cm⁻¹ (s); 868 cm⁻¹ (s); 831 cm⁻¹) (vw); 756 cm⁻¹ (w).

The obtained (HsiO_{1.5})_{0.9}(Me₃SiO_{0.5})_{0.1} resin (1 g) was dissolved in methylisobutylketone (4 g). The resin solution was cast in a polyethylene die. To form a film, the solvent was subjected to evaporation. The resin film was removed from the die, heated at 100°C for 1 hour, and then heated to 200°C at a heating rate of 1°C/min. After keeping it at 200°C for 2 hours, the resin film was cooled to 30°C at a cooling rate of 0.5°C/min. A film with a thickness of 0.54 mm was obtained.

Thermobalance measurements were carried out in an argon atmosphere under the thermal conditions shown hereinbelow using a sample of powder made of a film cured in the above described manner. The sample was (1) heated to 400°C at a heating rate of 20°C/min, (2) kept at this temperature for 1 hour, (3) heated to 450°C at a heating rate of 5°C/min, (4) kept at this temperature for 1 hour, and then cooled to room temperature. Although the polymer exhibited a weight loss of about 7% up to 400°C, no further weight loss was observed at 450°C.

### Example 2

A 300-mL round bottom flask was equipped with an overhead stirrer, condenser, and a charging funnel. H₂O (110 g; 6.11 mol) and methylisobutylketone (80 g) were added to the flask, and the solvent mixture was cooled to 10°C in an ice bath. A mixture of HSiCl₃ (25 g; 0.18 mol) and methylisobutylketone (35 g) was charged in the charging funnel. Subsequently, the chlorosilane solution was added under vigorous agitation to the cooled solvent mixture at a rate such that the temperature remained at about 10°C to 20°C (for about 60 minutes). After the above described addition, the reaction mixture was removed from the ice bath and subjected to agitation for another 3 hours. After that, the reaction mixture was allowed to stand to separate it into two layers. The organic phase was removed, water washed until a pH of about 6 to about 7 was obtained, and then dried by subjecting it to agitation along with MgSO₄. The drying agent was filtered off by passing through sintered glass frit. By doing su, a solution of hydrogen silsesquioxane resin was obtained. The solution was a transparent, gel-free, and homogeneous solution. Subsequently, the Si-OH groups present in the solution were immediately capped with Me₂HSiCl (45 g). Then, after subjecting the chlorosilane / filtrate mixture to agitation for 16 hours using magnetic stirring bars and then removing the solvent under vacuum, 6.5 g white powder (with a yield of 62.3% as converted to HSiO_{1.5}) was obtained.

### Comparative Example 1

26.58 g (1.476 mol) water and 95 g MIBK were placed in a flask and, while maintaining the system at 10°C, a solution obtained by dissolving 25 g (0.1846 mol) trichlorosilane in 30 g MIBK was gradually added thereto in a dropwise manner over a period of 60 minutes. However, during the dropwise addition, a gel was produced. Additionally, it was visually confirmed that the system consisted of a single phase both during the addition and upon completion of the addition. Also, the mole ratio of water to trichlorosilane in the system was 8:1.

### Example 3

60 g (3.3 mol) water and 95 g MIBK were charged in a flask and, while maintaining the system at 10°C, a solution obtained by dissolving 25 g (0.1846 mol) trichlorosilane in 30 g MIBK was gradually added thereto in a dropwise manner over a period of 60 minutes. Then, upon completion of the addition, the temperature of the system was brought back to room temperature, and agitation was conducted for 30 minutes. In the process, no gel generation was observed. Also, it was visually confirmed that the system consisted of two phases both during the addition and upon completion of the addition. The reaction solution was filtered, and the organic phase was water washed until the washing water became neutral. Subsequently, a solution of hydrogen silsesquioxane resin was obtained by drying the organic phase with a drying agent (MgSO₄). Then, a white powder (HSiO_{1.5})_{0.92}(HMe₂SiO_{0.5})_{0.8} was obtained with a yield of 92%, as converted to HSiO_{1.5}, by treating said hydrogen silsesquioxane resin solution in the same manner as in Example 1 with the exception of using HMe₂SiCl (20 g) instead of MeSiCl₃ (45 g), as was done in Example 1. Also, the mole ratio of water to trichlorosilane in the system was 18:1.

## Claims

1. A process for hydrolizing and condensing trichlorosilane comprising hydrolysis and condensation of trichlorosilane in a two-phase system comprising water and an organic solvent to produce a resin wherein the organic solvent comprises at least one oxygen-containing organic solvent.

2. The process as claimed in claim 1 wherein the amount of the water is at least 12 mol per 1 mol of the trichlorosilane.

3. The process as claimed in claims 1-2 further comprising isolating the resin.

4. The process as claimed in claims 1-3 wherein the resin is further treated with a chlorosilane represented by the general formula
R₃SiCl
wherein R is independently selected from the group consisting of methyl, vinyl and a hydrogen atom.

5. The process as claimed in claims 1-4 wherein the oxygen containing organic solvent is selected from the group consisting of ketone solvents, ether solvents, and ester solvents.

6. The process as claimed in claims 1-5 wherein the hydrolysis and condensation of trichlorosilane is at a temperature between about 10 to 25°C under agitation.

7. A process for the preparation of hydrogen silsesquioxane resin comprising hydrolysis and condensation of trichlorosilane in a two-phase system comprising water and an organic solvent to produce hydrogen silsesquioxane resin wherein the organic solvent comprises at least one oxygen-containing organic solvent.

8. The process as claimed in claim 7 wherein the amount of the water is at least 12 mol per 1 mol of the trichlorosilane.

9. The process as claimed in claims 7-8 further comprising the resin.

10. The process as claimed in claims 7-9 wherein the resin is further treated with a chlorosilane represented by the general formula
R₃SiCl
wherein R is independently selected from the group consisting of methyl, vinyl and a hydrogen atom.

11. The process as claimed in claims 7-10 wherein the oxygen containing organic solvent is selected from the group consisting of ketone solvents, ether solvents, and ester solvents.

12. The process as claimed in claims 7-11 wherein the hydrolysis and condensation of trichlorosilane is at a temperature between about 10 to 25°C under agitation.

13. The product obtainable by the process of claim 1.

14. The product obtainable by the process of claim 4.

15. The product obtainable by the process of claim 7.

16. The product obtainable by the process of claim 10.
